# EUROPEAN PATENT APPLICATION

(11) **EP 4 797 390 A1**
(43) Date of publication of application: **26.08.2026**
(21) Application number: 24884440.9
(22) Date of filing: 17.10.2024
(51) Int. Cl.: H01M 10/658

(54) **BATTERY MODULE, BATTERY PACK, AND ELECTRIC SYSTEM**

(30) Priority: 30.10.2023 CN 202311431396
(71) Applicant: BYD Company Limited, Shenzhen, Guangdong 518118 (CN)
(72) Inventor: YUE, Qianli, Shenzhen, Guangdong 518118 (CN); CAI, Yaomin, Shenzhen, Guangdong 518118 (CN); ZHONG, Rijun, Shenzhen, Guangdong 518118 (CN); SU, Bizhe, Shenzhen, Guangdong 518118 (CN); LU, Zhipei, Shenzhen, Guangdong 518118 (CN)
(74) Representative: Taor, Simon Edward William
(86) International application number: PCT/CN2024/125391
(87) International publication number: WO 2025/092436

(57) **Abstract**

This application provides a power consumption system. The power consumption system includes a battery pack, the battery pack includes a battery group, and the battery group includes a battery cell and a heat-absorbing layer. The heat-absorbing layer includes a water-containing layer, and the heat-absorbing layer is disposed on at least a part of a surface of the battery cell. The water-containing layer includes a matrix and water, the matrix is made of a hydrophilic polymer material, and the water in the water-containing layer is detachable from the matrix by heating.

The battery cell and the water-containing layer satisfy the following condition: $0.2 \leq \frac{0.6 {Q}_{c} - 360 {c}_{p} m}{2252 rρSD} \leq 30 .$

## Description

This application claims priority to Chinese Patent Application No. 202311431396.0, filed with the China National Intellectual Property Administration on October 30, 2023 and entitled "BATTERY GROUP, BATTERY PACK, AND POWER CONSUMPTION SYSTEM", which is incorporated herein by reference in its entirety.

### TECHNICAL FIELD

This application pertains to the field of battery technologies, and specifically relates to a battery group, a battery pack, and a power consumption system.

### BACKGROUND

At present, new energy vehicles have gradually entered the mass market. However, as a penetration rate of new energy becomes increasingly high, a thermal safety issue of the new energy vehicles becomes increasingly prominent. During a vehicle collision or battery pack fast charging, a short circuit may occur inside a cell (battery cell) of a battery pack in a new energy vehicle, and an intense chemical reaction may occur inside the cell. Consequently, a large amount of heat is generated, causing thermal runaway of the battery cell. If heat generated at a thermal runaway position of the cell cannot be dissipated to the outside in time, thermal runaway of the cell is very likely to be accelerated, resulting in poor safety.

In the related art, an aerogel sheet is placed between battery cells, and low thermal conductivity of aerogel is used to delay transfer of heat of an out-of-control battery cell to another battery cell, thereby preventing thermal diffusion of a battery pack.

A feature of the related art is that the aerogel is only a thermal insulation material, and can only delay heat transfer but cannot prevent heat transfer. Specifically, the aerogel only delays heat transfer on a surface attached to the out-of-control battery cell. However, when a specific position of a battery is out of control and heat generated by the battery increases sharply, heat of an out-of-control battery cell is still conducted to another battery cell through another component (such as a tray and a cooling plate), and a problem of the sharp heat increase cannot be resolved from the root. In addition, when the aerogel is used to prevent thermal diffusion, to achieve a good effect, a thickness of the aerogel is usually increased. This further compresses space inside the battery pack, resulting in a smaller quantity of battery cells that can be mounted and a lower volumetric energy density of the entire pack.

### SUMMARY

For a problem that a thermal runaway protection structure of an existing battery affects a volumetric energy density and has an insufficient thermal diffusion protection effect, this application provides a battery group, an electric vehicle, and an energy storage system.

Technical solutions used in this application to resolve the foregoing technical problem are as follows:

An embodiment of this application provides a battery group, which includes a battery cell and a heat-absorbing layer. The heat-absorbing layer includes a water-containing layer, and the heat-absorbing layer is disposed on at least a part of a surface of the battery cell. The water-containing layer includes a matrix and water, the matrix is made of a hydrophilic polymer material, and the water in the water-containing layer is detachable from the matrix by heating.

The battery cell and the water-containing layer satisfy the following condition: $0.2 \leq \frac{2252 rρSD}{0.6 {Q}_{c} - 360 {c}_{p} m} \leq 30 .$

D is a thickness of the water-containing layer, and is in a unit of m.

Q_{c} is a capacity of the battery cell, and is in a unit of kJ.

cₚ is a specific heat capacity of the battery cell, and is in a unit of kJ kg⁻¹ K⁻¹.

m is a mass of the battery cell, and is in a unit of kg.

S is a contact area between the battery cell and the heat-absorbing layer, and is in a unit of m².

ρ is a density of the water-containing layer, and is in a unit of kg m⁻³.

r is a mass percentage of the water in the water-containing layer.

Optionally, the thickness D of the water-containing layer is 0.00025 to 0.001 m.

Optionally, the capacity Q_{c} of the battery cell is 576 to 3456 kJ.

Optionally, the specific heat capacity cₚ of the battery cell is 0.8 to 1.2 kJ kg⁻¹ K⁻¹.

Optionally, the mass m of the battery cell is 1 to 5 kg.

Optionally, the contact area S between the battery cell and the heat-absorbing layer is 0.02 to 0.5 m².

Optionally, the density ρ of the water-containing layer is 900 to 1200 kg m⁻³.

Optionally, the mass percentage r of the water in the water-containing layer is 80% to 99%.

Optionally, the heat-absorbing layer further includes an encapsulation film, and the water-containing layer is encapsulated in the encapsulation film.

Optionally, the heat-absorbing layer further includes a first vapor chamber and a second vapor chamber, the water-containing layer is sandwiched between the first vapor chamber and the second vapor chamber, and an edge region of the water-containing layer is in communication with external space.

Optionally, a first cavity is formed inside the first vapor chamber, and the first cavity is filled with a phase change working medium, and/or a second cavity is formed inside the second vapor chamber, and the second cavity is filled with a phase change working medium.

Optionally, first capillary structures that are in communication with each other are disposed on an inner wall of the first cavity, and/or second capillary structures that are in communication with each other are disposed on an inner wall of the second cavity.

Optionally, thicknesses of the first vapor chamber and the second vapor chamber each are 0.2 to 0.5 mm independently.

Optionally, there are a plurality of battery cells, the plurality of battery cells are disposed side by side, a single heat-absorbing layer is disposed between two adjacent battery cells, and the heat-absorbing layer and one of the battery cells adjacent to the heat-absorbing layer satisfy the following condition: $0.2 \leq \frac{0.6 {Q}_{c} - 360 {c}_{p} m}{2252 rρSD} \leq 30 .$.

Optionally, the heat-absorbing layer is disposed on a largest-area surface of the battery cell.

Optionally, an area of the heat-absorbing layer is less than or equal to an area of the largest-area surface of the battery cell.

Optionally, the water-containing layer is a hydrogel layer.

This application further provides a battery pack, which includes the battery group described above.

This application further provides a power consumption system, which includes the battery group described above or the battery pack described above.

According to the battery group provided in this application, the heat-absorbing layer is disposed on the surface of the battery cell, the water-containing layer is disposed in the heat-absorbing layer, and the heat-absorbing layer is configured to isolate the battery cell from another component (for example, another battery cell or an electric control device) that is susceptible to thermal runaway. When the battery cell encounters thermal runaway, the water-containing layer absorbs heat generated by the battery cell. When a temperature of the water-containing layer reaches a vaporization temperature of water, stored moisture is heated and quickly evaporated and takes away a large amount of heat, thereby effectively reducing a total amount of heat transferred by the out-of-control battery cell to an adjacent component, and improving a protection effect for the thermal runaway of the battery cell. In addition, the applicant has found through numerous experiments that when the capacity Q_{c}, the specific heat capacity cₚ, and the mass m of the battery cell are associated with the contact area S between the battery cell and the heat-absorbing layer, the density ρ of the water-containing layer, the mass percentage r of the water in the water-containing layer, and the thickness D of the water-containing layer, and the condition $0.2 \leq \frac{2252 rρSD}{0.6 {Q}_{c} - 360 {c}_{p} m} \leq 30$ is satisfied, an obtained battery group can ensure the protection effect for the thermal runaway of the battery cell, and a volumetric energy density of the battery group can be improved, so that the battery group can have both a relatively high volumetric energy density and relatively good safety.

### BRIEF DESCRIPTION OF DRAWINGS

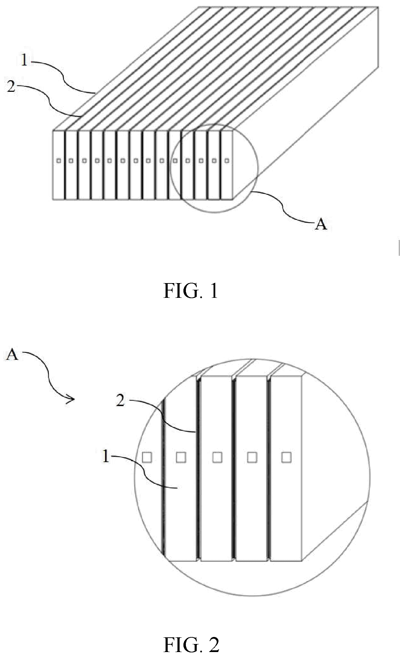

FIG. 1 is a schematic structural diagram of a battery group according to this application;
FIG. 2 is a schematic enlarged view of the position A in FIG. 1; and

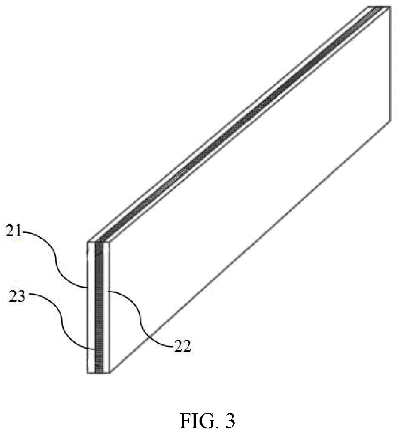

FIG. 3 is a schematic structural diagram of a heat-absorbing layer according to this application.

Reference numerals in the drawings for the specification are as follows:
1: battery cell; 2: heat-absorbing layer; 21: first vapor chamber; 22: second vapor chamber; 23: water-containing layer.

### DESCRIPTION OF EMBODIMENTS

To make technical problems to be resolved, technical solutions, and beneficial effects of this application clearer, the following further describes this application in detail with reference to the accompanying drawings and embodiments. It should be understood that the specific embodiments described herein are merely used to explain this application but are not intended to limit this application.

In the descriptions of this application, unless otherwise stated, "a plurality of" means two or more.

In the descriptions of this application, it should be noted that unless otherwise explicitly specified and limited, terms such as "dispose" and "connect" should be understood in a broad sense. For example, such terms may indicate a fixed connection, a detachable connection, or an integral connection, may indicate a mechanical connection or an electrical connection, and may indicate a direct connection, an indirect connection through an intermediate medium, or internal communication between two elements. A person of ordinary skill in the art may understand a specific meaning of the foregoing term in this application according to a specific situation.

An embodiment of this application provides a battery group, which includes a battery cell 1 and a heat-absorbing layer 2. The heat-absorbing layer 2 includes a water-containing layer 23, and the heat-absorbing layer 2 is disposed on at least a part of a surface of the battery cell 1. The water-containing layer 23 includes a matrix and water, the matrix is made of a hydrophilic polymer material, and the water in the water-containing layer is vaporizable and detachable from the water-containing layer 23 by heating.

The battery cell 1 and the water-containing layer 23 satisfy the following condition: $0.2 \leq \frac{2252 rρSD}{0.6 {Q}_{c} - 360 {c}_{p} m} \leq 30 .$

D is a thickness of the water-containing layer 23, and is in a unit of m.

Q_{c} is a capacity of the battery cell 1, and is in a unit of kJ.

cₚ is a specific heat capacity of the battery cell 1, and is in a unit of kJ kg⁻¹ K⁻¹.

m is a mass of the battery cell 1, and is in a unit of kg.

S is a contact area between the battery cell 1 and the heat-absorbing layer 2, and is in a unit of m².

ρ is a density of the water-containing layer 23, and is in a unit of kg m⁻³.

r is a mass percentage of the water in the water-containing layer 23.

The heat-absorbing layer 2 is configured to isolate the battery cell 1 from another component (for example, another battery cell 1 or an electric control device) that is susceptible to thermal runaway. When the battery cell 1 encounters thermal runaway, the water-containing layer 23 absorbs heat generated by the battery cell 1. When a temperature of the water-containing layer 23 reaches a vaporization temperature of water, stored moisture is heated and quickly evaporated and takes away a large amount of heat, thereby effectively reducing a total amount of heat transferred by the out-of-control battery cell 1 to an adjacent component, and improving a protection effect for the thermal runaway of the battery cell 1. In addition, the applicant has found through numerous experiments that when the capacity Q_{c}, the specific heat capacity cₚ, and the mass m of the battery cell 1 are associated with the contact area S between the battery cell 1 and the heat-absorbing layer 2, the density ρ of the water-containing layer 23, the mass percentage r of the water in the water-containing layer 23, and the thickness D of the water-containing layer 23, and the condition $0.2 \leq \frac{2252 rρSD}{0.6 {Q}_{c} - {36}_{p} m} \leq 30$ is satisfied, an obtained battery group can ensure the protection effect for the thermal runaway of the battery cell 1, a volume of the battery group occupied by disposing the water-containing layer 23 can be reduced, and a volumetric energy density of the battery group can be improved, so that the battery group can have both a relatively high volumetric energy density and relatively good safety.

In the foregoing implementation, one heat-absorbing layer 2 may be disposed on each of two sides of one battery cell 1, and the battery cell and a heat-absorbing layer 2 on one side of the battery cell should satisfy the limiting condition in the foregoing implementation.

The foregoing parameters may be measured with reference to the following content. Details are as follows:
Thickness D of the water-containing layer 23: An optical test method may be used for the thickness D of the water-containing layer. A thickness of a sample is tested by using an interference phenomenon of light. Alternatively, the thickness of the water-containing layer may be directly measured by using a measurement element such as a vernier caliper.

Contact area S between the battery cell 1 and the heat-absorbing layer 2: The contact area S between the battery cell and the heat-absorbing layer is an actual contact area between a heat-absorbing material and the battery cell, that is, a contact area between the heat-absorbing layer and a battery cell on a side adjacent to the heat-absorbing layer, or may be considered as a contact area between the water-containing layer and a battery cell on a side adjacent to the water-containing layer. Generally, the contact area S between the battery cell and the heat-absorbing layer is consistent with a surface area of the battery cell in contact with the heat-absorbing layer.

Specific heat capacity Cₚ of the battery cell 1: A test method for the specific heat capacity of the battery cell is as follows:

A differential scanning calorimetry (DSC) test method is used.

Specifically, specific steps of testing a specific heat capacity of a sample by a DSC (differential scanning calorimeter) are as follows:
1. Sample preparation: The sample is prepared, and a sample mass should be less than a measurement range of a thermal analyzer calorimeter.
2. Sample filling: A DSC sample container is filled with sample powder, and it is ensured that the sample container has the same thermal capacity as a reference container used in an experiment.
3. Sample closure: The sample container is closed, which is usually sealed with an aluminum or stainless steel round cover.
4. Experimental parameter setting: Experimental parameters including a scanning rate, a heating rate, a cooling rate, a temperature range, and the like are set as needed. (Specific experimental parameters are determined based on an actual situation. This is not limited in this application.)
5. Experimental operation: A DSC instrument is started to conduct an experiment, and the sample is heated or cooled based on the set parameters.
6. Data collection: Heat exchange between the sample and the reference container is recorded by using the DSC instrument, to obtain a heat flow curve.
7. Data analysis: Based on the obtained heat flow curve, the curve is analyzed and processed by using special software.
8. Specific heat capacity calculation: The specific heat capacity of the sample is calculated based on parameters such as the sample mass, the scanning rate, and a peak area by using a corresponding formula.

Density ρ of the water-containing layer 23: The density of the water-containing layer is usually measured by using a densimeter, and a specific method is as follows:
Densimeter method: A principle of the densimeter method is to determine a density of a substance by measuring a mass of the substance in a fixed volume. A sample is placed in the densimeter, stabilization of the sample is waited for a few seconds, and then a value displayed on the densimeter is read.

Mass percentage r of the water in the water-containing layer: TGA (thermogravimetric analysis) may detect a thermal property and reactions such as degradation and dehydration of a material by monitoring a change in a sample mass, to infer water content of the material. The following is a TGA-based water content test method for the water-containing layer:
1. Sample preparation: A sample of a water-containing material is prepared, and an initial mass of the sample is recorded.
2. Sample placement: The sample of the water-containing material is evenly placed on a sample stage, and evenness of the sample is maintained as far as possible.
3. Temperature range setting: A temperature range is set in a TGA instrument, and the sample is heated based on a setting temperature.
4. Mass change monitoring: During thermal decomposition of the sample, the TGA instrument continuously records a change curve of the sample mass. When moisture in the sample starts to volatilize, the total mass of the sample changes.
5. Water content calculation: Through analysis and calculation for a thermal analysis curve, information about water content can be obtained, and the water content is the mass percentage of the water in the water-containing layer.

TGA test parameters are as follows:
atmosphere: Ar; rate: 50.0 mL/min; heating rate: 10°C/min; and temperature range for calculating the water content: 20 to 150°C.

In an embodiment of this application, the matrix in the water-containing layer is made of a hydrophilic polymer material, for example, starch, cellulose, polyethylene glycol, sodium alginate, hydrogel, or sodium polyacrylate. The hydrophilic polymer material can absorb and retain a large amount of water (up to 99% of water) due to a cross-linked network structure and a large quantity of hydrophilic groups of the hydrophilic polymer material. When a large amount of water is retained, the polymer network structure can also well maintain integrity thereof, to avoid problems such as liquid flow. These properties allow the hydrophilic polymer material such as the hydrogel to have a great potential in utilizing a cooling capacity of water.

In some embodiments, the thickness D of the water-containing layer 23 is 0.00025 to 0.001 m.

In a specific embodiment, the thickness D of the water-containing layer 23 may be 0.00025 m, 0.0003 m, 0.00035 m, 0.00038 m, 0.0004 m, 0.00045 m, 0.0005 m, 0.00055 m, 0.0006 m, 0.00065 m, 0.0007 m, 0.00075 m, 0.00078 m, 0.0008 m, 0.00085 m, 0.0009 m, 0.00095 m, or 0.001 m.

The thickness D of the water-containing layer 23 affects a protection effect of the water-containing layer 23 for thermal runaway of the battery cell 1. When the thickness D of the water-containing layer 23 falls within the foregoing range, improvement in the protection effect for the thermal runaway of the battery cell 1 is facilitated, and impact on an energy density of a battery is reduced.

In some embodiments, the capacity Q_{c} of the battery cell 1 is 576 to 3456 kJ.

In a specific embodiment, the capacity Q_{c} of the battery cell 1 may be 576 kJ, 580 kJ, 600 kJ, 610 kJ, 650 kJ, 680 kJ, 700 kJ, 780 kJ, 800 kJ, 810 kJ, 850 kJ, 880 kJ, 900 kJ, 910 kJ, 950 kJ, 980 kJ, 1000 kJ, 1050 kJ, 1080 kJ, 1110 kJ, 1150 kJ, 1180 kJ, 1200 kJ, 1210 kJ, 1250 kJ, 1280 kJ, 1300 kJ, 1450 kJ, 1650 kJ, 1870 kJ, 1980 kJ, 2000 kJ, 2050 kJ, 2080 kJ, 2110 kJ, 2150 kJ, 2180 kJ, 2200 kJ, 2210 kJ, 2250 kJ, 2280 kJ, 2300 kJ, 2450 kJ, 2650 kJ, 2870 kJ, 2980 kJ, 3150 kJ, 3200 kJ, 3350 kJ, or 3456 kJ.

In the description of this application, the term "capacity Q_{c} of the battery cell 1" is obtained by converting energy of the battery cell 1 from an electric energy unit to a thermal unit. Specifically, when the energy of the battery cell 1 is 1 Wh, the capacity Q_{c} of the battery cell 1 converted from the energy is 1 kJ.

The capacity Q_{c} of the battery cell 1 is related to the energy stored in the battery cell 1. As the capacity Q_{c} of the battery cell 1 increases, electric energy that can be released by the battery cell 1 gradually increases. However, an excessively high capacity Q_{c} of the battery cell 1 means that the battery cell 1 releases more heat once thermal runaway occurs. When the capacity Q_{c} of the battery cell 1 falls within the foregoing range, the battery cell 1 has relatively high output electric energy, and the thermal runaway is relatively controllable.

In some embodiments, the specific heat capacity cₚ of the battery cell 1 is 0.8 to 1.2 kJ kg⁻¹ K⁻¹.

In a specific embodiment, the specific heat capacity cₚ of the battery cell 1 may be 0.8 kJ kg⁻¹ K⁻¹, 0.81 kJ kg⁻¹ K⁻¹, 0.85 kJ kg⁻¹ K⁻¹, 0.88 kJ kg⁻¹ K⁻¹, 0.9 kJ kg⁻¹ K⁻¹, 0.91 kJ kg⁻¹ K⁻¹, 0.95 kJ kg⁻¹ K⁻¹, 0.98 kJ kg⁻¹ K⁻¹, 1 kJ kg⁻¹ K⁻¹, 1.05 kJ kg⁻¹ K⁻¹, 1.08 kJ kg⁻¹ K⁻¹, 1.11 kJ kg⁻¹ K⁻¹, 1.15 kJ kg⁻¹ K⁻¹, 1.18 kJ kg⁻¹ K⁻¹, or 1.2 kJ kg⁻¹ K⁻¹.

In some embodiments, the mass m of the battery cell 1 is 1 to 5 kg.

In a specific embodiment, the mass m of the battery cell 1 may be 1.0 kg, 1.2 kg, 1.4 kg, 1.7 kg, 1.9 kg, 2.1 kg, 2.2 kg, 2.4 kg, 2.7 kg, 2.9 kg, 3.1 kg, 3.3 kg, 3.5 kg, 3.9 kg, 4.1 kg, 4.3 kg, 4.6 kg, 4.9 kg, or 5.0 kg.

The specific heat capacity cₚ of the battery cell 1 and the mass m of the battery cell 1 determine a thermal capacity of the battery cell 1 during thermal runaway of the battery cell 1. When the specific heat capacity cₚ of the battery cell 1 and the mass m of the battery cell 1 fall within the foregoing ranges, the obtained battery cell 1 has a relatively high thermal capacity.

In some embodiments, the contact area S between the battery cell 1 and the heat-absorbing layer 2 is 0.02 to 0.5 m².

In a specific embodiment, the contact area S between the battery cell 1 and the heat-absorbing layer 2 may be 0.02 m², 0.05 m², 0.08 m², 0.1 m², 0.12 m², 0.15 m², 0.18 m², 0.2 m², 0.22 m², 0.25 m², 0.28 m², 0.3 m², 0.32 m², 0.35 m², 0.38 m², 0.4 m², 0.42 m², 0.45 m², 0.48 m², or 0.5 m².

The contact area S between the battery cell 1 and the heat-absorbing layer 2 affects a heat conduction rate of the battery cell 1 for the water-containing layer 23. As the contact area S between the battery cell 1 and the heat-absorbing layer 2 increases, improvement in efficiency of heat exchange between the battery cell 1 and the water-containing layer 23 is facilitated, so that the water-containing layer 23 can rapidly absorb heat generated by the battery cell 1.

In some embodiments, the density ρ of the water-containing layer 23 is 900 to 1200 kg m⁻³.

In a specific embodiment, the density ρ of the water-containing layer 23 may be 900 kg m⁻³, 910 kg m⁻³, 950 kg m⁻³, 980 kg m⁻³, 1000 kg m⁻³, 1050 kg m⁻³, 1080 kg m⁻³, 1110 kg m⁻³, 1150 kg m⁻³, 1180 kg m⁻³, or 1200 kg m⁻³.

In some embodiments, the mass percentage r of the water in the water-containing layer 23 is 80% to 99%.

In a specific embodiment, the mass percentage r of the water in the water-containing layer 23 may be 80%, 81%, 82%, 83%, 84%, 85%, 86%, 87%, 88%, 89%, 90%, 91%, 92%, 93%, 94%, 95%, 96%, 97%, 98%, or 99%.

The water in the water-containing layer 23 plays a role of vaporization and heat absorption during thermal runaway of the battery cell 1, and the density ρ of the water-containing layer 23 and the mass percentage r of the water in the water-containing layer 23 affect absorbed heat vaporized by the water-containing layer 23 per unit mass. When the density ρ of the water-containing layer 23 and the mass percentage r of the water in the water-containing layer 23 fall within the foregoing ranges, it is conducive to ensuring that sufficient water is available for heat absorption of the battery cell 1.

In some embodiments, the heat-absorbing layer 2 further includes an encapsulation film, and the water-containing layer 23 is encapsulated in the encapsulation film.

The encapsulation film is configured to shape the water-containing layer 23 while avoiding evaporation of the water in the water-containing layer 23 in a case without thermal runaway.

In the foregoing embodiment, the contact area between the battery cell and the heat-absorbing layer is a contact area between the encapsulation film and the battery cell adjacent to the encapsulation film.

In some embodiments, the heat-absorbing layer 2 further includes a first vapor chamber 21 and a second vapor chamber 22, the water-containing layer 23 is sandwiched between the first vapor chamber 21 and the second vapor chamber 22, and an edge region of the water-containing layer 23 is in communication with external space (that is, space inside a battery pack). This helps quickly discharge the water in the water-containing layer 23 to the external space during vaporization, thereby implementing a fast heat dissipation effect.

The first vapor chamber 21 and the second vapor chamber 22 have relatively high thermal conductivity. Compared with directly using the water-containing layer 23 as a heat-absorbing material, forming a sandwich structure by using the first vapor chamber 21, the water-containing layer 23, and the second vapor chamber 22 can effectively improve utilization of the water-containing layer 23, and can rapidly transfer heat to an entire surface of the battery cell 1 at an initial phase in which thermal runaway occurs at a local position of the battery cell 1, so that both sensible heat and latent heat of the water-containing layer 23 in each part can be effectively utilized.

In some embodiments, the first vapor chamber 21 and the second vapor chamber 22 are selected from a metal material or another thermally conductive material, and the another thermally conductive material includes a carbon material.

In some embodiments, the first vapor chamber 21 and the second vapor chamber 22 use a metal material, which includes one or more of aluminum and an aluminum alloy, copper and a copper alloy, iron and an iron alloy, and nickel and a nickel alloy.

In a preferred embodiment, the first vapor chamber 21 and the second vapor chamber 22 are selected from the copper and the copper alloy. The copper and the copper alloy have relatively high thermal conductivity and good processability.

In some embodiments, a first cavity is formed inside the first vapor chamber 21, a second cavity is formed inside the second vapor chamber 22, and both the first cavity and the second cavity are filled with a phase change working medium.

The first vapor chamber 21 and/or the second vapor chamber 22 are/is directly in contact with an adjacent battery cell 1. When the first vapor chamber 21 or the second vapor chamber 22 is locally heated, a phase change working medium at a position of the local heating evaporates and diffuses to an unheated position in a gas form, and condenses and releases heat at the unheated position, thereby ensuring rapid thermal diffusion, so that the water-containing layer 23 is heated evenly and rapidly.

In addition, when the battery cell 1 works normally, the first vapor chamber 21 and/or the second vapor chamber 22 may be used to reduce a temperature difference on the surface of the battery cell 1, and the sensible heat of the water-containing layer 23 is used to absorb a part of heat, thereby improving heat dissipation efficiency of the battery cell 1, and ensuring stable operation of the battery cell 1.

In some embodiments, first capillary structures that are in communication with each other are disposed on an inner wall of the first cavity, and second capillary structures that are in communication with each other are disposed on an inner wall of the second cavity.

The first capillary structure and the second capillary structure are structures that can generate capillarity, and include a porous structure and/or a slot-shaped structure. Disposing the first capillary structure on the inner wall of the first cavity and disposing the second capillary structure on the inner wall of the second cavity facilitate even distribution of a liquid phase change working medium inside the first cavity and the second cavity. After the phase change working medium in the first cavity and the second cavity condenses at the unheated position, the first capillary structure and the second capillary structure are used to continuously attract the liquid phase change working medium to the position of local heating of the first vapor chamber 21 or the second vapor chamber 22 by using capillarity, to form a heat absorption-heat release cycle, and improve heat conduction efficiency.

In some embodiments, thicknesses of the first vapor chamber 21 and the second vapor chamber 22 are 0.2 to 0.5 mm.

In some embodiments, there are a plurality of battery cells 1, the plurality of battery cells 1 are disposed side by side, a single heat-absorbing layer 2 is disposed between two adjacent battery cells 1, and the heat-absorbing layer 2 and any battery cell 1 adjacent to the heat-absorbing layer 2 satisfy the following condition: $0.2 \leq \frac{2252 rρSD}{0.6 {Q}_{c} - 360 {c}_{p} m} \leq 30$.

In some embodiments, the heat-absorbing layer 2 is disposed on a largest-area surface of the battery cell 1, to ensure that the heat-absorbing layer can better absorb heat generated by the battery cell, thereby improving safety of the battery pack.

Further, an area of the heat-absorbing layer is less than or equal to an area of the largest-area surface of the battery cell.

Still further, the area of the heat-absorbing layer 2 is consistent with that of the largest-area surface of the battery cell 1, which helps improve heat conduction efficiency between the heat-absorbing layer 2 and the battery cell 1.

In some embodiments, in the heat-absorbing layer 2, there is a single water-containing layer 23 or there are a plurality of water-containing layers 23 that are stacked. When there are a plurality of water-containing layers 23 that are stacked, the thickness D of the water-containing layer 23 refers to a total thickness of the plurality of water-containing layers 23.

In some embodiments, the water-containing layer 23 is a hydrogel layer.

Specifically, hydrogel is a polymer having a three-dimensional network structure, can absorb a large amount of moisture in water and swell, and can continue to maintain an original structure of the hydrogel without being dissolved after swelling. Disposing the hydrogel layer as the water-containing layer 23 helps retain moisture with relatively high content between battery cells 1, and ensure that the water-containing layer 23 can maintain a form of the water-containing layer 23 in a normal working state of the battery, thereby avoiding a moisture loss in the water-containing layer 23.

In some embodiments, the hydrophilic polymer material includes one or more of collagen, gelatin, hyaluronic acid, chitosan, polyacrylic acid and a derivative thereof, polyvinyl alcohol, polyoxyethylene, and polyacrylamide. In this embodiment, the hydrophilic polymer material is mixed with water to obtain the water-containing layer.

In some embodiments, the battery cell 1 is a lithium iron phosphate battery or a ternary battery.

In some embodiments, a shape of the battery cell 1 is not particularly limited. For example, the battery cell 1 may be in a cuboid shape or another regular or irregular shape.

Another embodiment of this application provides a battery pack, which includes the battery group described above. The battery pack includes a sealing cover and a tray that fits with the sealing cover to form an accommodating cavity. The battery group is placed in the accommodating cavity.

Another embodiment of this application provides a power consumption system, which includes the battery group described above or the battery pack described above. The power consumption system may be a vehicle or an energy storage system.

The following further describes this application by using examples.

**Table 1**

| Sequence number | Thickness D of the water-containing layer/m | Capacity Q_{c} of the battery cell/kJ | Specific heat capacity cₚ of the battery cell/kJ kg⁻¹ K⁻¹ | Mass m of the battery cell/kg | Contact area S between the battery cell and the heat-absorbing layer/m² | Density ρ of the water-containing layer/kg m⁻³ | Mass percentage r of the water in the water-containing layer | $\frac{2252 rρSD}{0.6 {Q}_{c} - 360 {c}_{p} m}$ |
|---|---|---|---|---|---|---|---|---|
| Example 1 | 0.00025 | 934.27 | 1.01 | 1.52 | 0.05552 | 1000.0 | 0.85 | 3.367 |
| Example 2 | 0.0005 | 1958.40 | 1.00 | 2.95 | 0.09792 | 1000.0 | 0.85 | 0.829 |
| Example 3 | 0.001 | 2499.84 | 1.00 | 3.8 | 0.08125 | 1000.0 | 0.85 | 1.179 |
| Example 4 | 0.0005 | 2073.60 | 1.00 | 3.33 | 0.09108 | 1000.0 | 0.85 | 1.922 |
| Example 5 | 0.0016 | 2499.84 | 1.00 | 3.8 | 0.08125 | 1000.0 | 0.85 | 1.887 |
| Example 6 | 0.0005 | 785.66 | 1.00 | 1.305 | 0.045 | 1000.0 | 0.85 | 26.945 |
| Example 7 | 0.00015 | 1958.40 | 1.00 | 2.95 | 0.09792 | 1000.0 | 0.85 | 0.249 |
| Example 8 | 0.00055 | 785.66 | 0.99 | 1.305 | 0.045 | 1200.0 | 0.95 | 10.092 |
| Example 9 | 0.0003 | 1958.40 | 1.00 | 2.95 | 0.09792 | 1000.0 | 0.80 | 0.468 |
| Example 10 | 0.00035 | 1958.40 | 1.00 | 2.95 | 0.09792 | 1000.0 | 0.85 | 0.580 |
| Example 11 | 0.00025 | 785.66 | 1.00 | 1.305 | 0.045 | 1000.0 | 0.85 | 13.473 |
| Example 12 | 0.0003 | 785.66 | 1.00 | 1.305 | 0.045 | 1000.0 | 0.85 | 16.167 |
| Example 17 | 0.0005 | 1958.40 | 1.00 | 2.95 | 0.09792 | 900.0 | 0.85 | 0.746 |
| Example 18 | 0.0005 | 1958.40 | 1.00 | 2.95 | 0.09792 | 1200.0 | 0.85 | 0.995 |
| Example 19 | 0.0005 | 1958.40 | 1.00 | 2.95 | 0.09792 | 1300.0 | 0.85 | 1.078 |
| Example 20 | 0.0005 | 1958.40 | 1.00 | 2.95 | 0.09792 | 1400.0 | 0.85 | 1.161 |
| Example 21 | 0.0005 | 785.66 | 1.00 | 1.305 | 0.045 | 1000.0 | 0.75 | 23.775 |
| Example 22 | 0.0005 | 785.66 | 1.00 | 1.305 | 0.045 | 1000.0 | 0.80 | 25.360 |
| Example 23 | 0.0005 | 785.66 | 1.00 | 1.305 | 0.045 | 1000.0 | 0.90 | 28.530 |
| Example 24 | 0.0005 | 785.66 | 1.00 | 1.305 | 0.045 | 1000.0 | 0.94 | 29.798 |
| Comparative Example 1 | 0 | 2499.84 | 1.00 | 3.8 | 0.08125 | 1000.0 | 0.85 | 0.000 |
| Comparative Example 2 | 0.0004 | 2499.84 | 1 | 3.8 | 0.02031 | 1000 | 0.85 | 0.118 |
| Comparative Example 3 | 0.004 | 934.272 | 1 | 1.52 | 0.05552 | 1000 | 0.85 | 31.812 |
| Comparative Example 4 | 0.0015 | 785.664 | 1 | 1.305 | 0.045 | 1000 | 0.85 | 80.836 |
| Comparative Example 5 | 10 | 785.664 | 1 | 1.305 | 0.045 | 1000 | 0.85 | 538907.658 |

### Example 1

This example is used to describe the battery group disclosed in this application.

A lithium iron phosphate battery whose capacity Q_{c} is 934.27 kJ is used as a battery cell, a mass m of the battery cell is 1.52 kg, a specific heat capacity cₚ is about 1010 J kg⁻¹ K⁻¹, and a contact area between the battery cell and a heat-absorbing layer is an area S of a battery cell surface in contact with the heat-absorbing layer and is 0.05552 m². Five battery cells are disposed side by side at intervals, a heat-absorbing layer is disposed between two adjacent battery cells, the heat-absorbing layer includes a water-containing layer, the water-containing layer is selected from a hydrogel layer, a mass percentage r of water in the water-containing layer is 85%, a thickness D of the water-containing layer is 0.25 mm, and a density ρ of the water-containing layer is 1000 kg m⁻³.

### Examples 2 to 24

Examples 2 to 24 are used to describe the battery group disclosed in this application, which includes most of the features in Example 1. A difference is as follows:
Battery groups provided in Examples 2 to 24 use the capacities Q_{c} of the battery cell, the specific heat capacities cₚ, the masses m, the contact areas S between the battery cell and the heat-absorbing layer, the densities ρ of the water-containing layer, the mass percentages r of the water in the water-containing layer, and the thicknesses D of the water-containing layer shown in Examples 2 to 24 in Table 1.

### Comparative Examples 1 to 5

Comparative Examples 1 to 5 are used to comparatively describe the battery group disclosed in this application, which includes most of the features in Example 1. A difference is as follows:
Battery groups provided in Comparative Examples 1 to 5 use the capacities Q_{c} of the battery cell, the specific heat capacities cₚ, the masses m, the contact areas S between the battery cell and the heat-absorbing layer, the densities ρ of the water-containing layer, the mass percentages r of the water in the water-containing layer, and the thicknesses D of the water-containing layer shown in Comparative Examples 1 to 5 in Table 1.

### Performance test

The following performance tests are performed on the battery group prepared above:

### 1. Volumetric energy density test

A charge/discharge test is performed on the obtained battery group to obtain a battery capacity of the battery group, volumes of the battery cell and the water-containing layer are measured and calculated, and a volumetric energy density and a volumetric energy density decrease rate of a single battery cell are obtained by using the following formulas:
volumetric energy density of a single battery cell = capacity of the single battery cell/volume of the single battery cell;
volumetric energy density of a single new battery cell = capacity of the single battery cell/(volume of the single battery cell + volume of a water-containing layer); and
volumetric energy density decrease rate = volumetric energy density of the single battery cell - volumetric energy density of the single new battery cell.

A measurement method for the volume of the battery cell and the volume of the water-containing layer is as follows: For a single battery cell or water-containing layer, a volume of the battery cell may be obtained by measuring a length, a width, and a height of the battery cell, and a volume of the water-containing layer may be obtained by measuring a length, a width, and a height of the water-containing layer. Alternatively, a drainage method is used for measurement. This is not further limited in this application.

A battery capacity test method is as follows:
(1) At room temperature, perform charging to a cut-off voltage with a low current, and rest for 1 h.
(2) Perform discharging to the cut-off voltage with a constant current of 1/3C, and rest for 1 h.
(3) Repeat steps 1 and 2 for a total of two times. Record a second discharge capacity as a battery capacity.

Generally, the low current is between 1/5C and 1/2C. In this embodiment, a lithium iron phosphate battery is used. Therefore, the cut-off voltage is 3.75 V.

### 2. Battery thermal runaway safety test

A nail penetration test is performed on a battery cell in a battery group to test whether a thermal diffusion phenomenon occurs after nail penetration triggers thermal runaway of the battery cell (whether adjacent battery cells encounter thermal runaway is used as a reference, and generally, whether a battery cell among the adjacent battery cells encounters thermal runaway is determined 15 min to 30 min after the nail penetration battery cell encounters thermal runaway). In addition, a highest temperature of the battery cell on which thermal runaway is triggered by nail penetration is monitored.

A battery thermal runaway safety test condition during the nail penetration test is as follows:
battery cell SOC: 100%;
temperature: room temperature 25°C;
pin material: steel pin with a diameter of 5 mm ± 0.2 mm and a cone angle of 45 ± 3;
nail penetration speed: 1 mm/s; and
nail penetration position: middle side of the top of the battery cell.

A thermal runaway determining condition is as follows:
(a) A trigger object generates a voltage drop, and a drop value exceeds 25% of an initial voltage.
(b) A temperature of a monitoring point reaches a maximum operating temperature specified by a manufacturer.
(c) A temperature rise rate of the monitoring point is dT/dt ≥ 1°C/s, and this lasts for more than 3s.

When (a) and (c) occur simultaneously or (b) and (c) occur simultaneously, it is determined that thermal runaway occurs.

The maximum temperature refers to a largest value among all thermocouple measurement points on the penetrated battery cell, and is usually near a nail penetration point.

Obtained test results are recorded in Table 2.

**Table 2**

| Sequence number | Volumetric energy density Wh/L | Volumetric energy density decrease rate | Whether thermal diffusion occurs after a battery cell is triggered by nail penetration | Highest temperature (°C) of a nail-penetrated battery cell in a nail penetration test |
|---|---|---|---|---|
| Example 1 | 339.953 | 0.018 | No | 364 |
| Example 2 | 396.825 | 0.036 | No | 380 |
| Example 3 | 393.846 | 0.046 | No | 372 |
| Example 4 | 389.176 | 0.031 | No | 379 |
| Example 5 | 383.249 | 0.072 | No | 378 |
| Example 6 | 346.413 | 0.036 | No | 363 |
| Example 7 | 407.000 | 0.011 | No | 392 |
| Example 8 | 345.180 | 0.039 | No | 356 |
| Example 9 | 402.576 | 0.022 | No | 385 |
| Example 10 | 401.123 | 0.025 | No | 382 |
| Example 11 | 352.711 | 0.018 | No | 375 |
| Example 12 | 351.433 | 0.022 | No | 368 |
| Example 17 | 396.825 | 0.036 | No | 369 |
| Example 18 | 396.825 | 0.036 | No | 353 |
| Example 19 | 396.825 | 0.036 | No | 382 |
| Example 20 | 396.825 | 0.036 | No | 391 |
| Example 21 | 346.413 | 0.036 | No | 395 |
| Example 22 | 346.413 | 0.036 | No | 371 |
| Example 23 | 346.413 | 0.036 | No | 351 |
| Example 24 | 346.413 | 0.036 | No | 322 |
| Comparative Example 1 | 412.873 | 0.000 | Yes | 682 |
| Comparative Example 2 | 410.888 | 0.005 | Yes | 602 |
| Comparative Example 3 | 267.106 | 0.229 | No | 363 |
| Comparative Example 4 | 323.319 | 0.100 | No | 356 |
| Comparative Example 5 | 206.374 | 0.426 | No | 309 |

According to the test results of Examples 1 to 12 and Comparative Examples 1 to 4, it can be learned that a heat-absorbing layer having a water-containing layer is used as a barrier between adjacent battery cells in a battery group. When a capacity Q_{c}, a specific heat capacity cₚ, and a mass m of the battery cell, a contact area S between the battery cell and the heat-absorbing layer, a density ρ of the water-containing layer, a mass percentage r of water in the water-containing layer, and a thickness D of the water-containing layer satisfy a condition of $0.2 \leq \frac{2252 rρS}{0.6 {Q}_{c} - 360 {c}_{p} m} \leq 30$ , an obtained battery group can have both a relatively high volumetric energy density and a relatively good effect of preventing thermal runaway of a battery. It indicates that adjusting the capacity Q_{c}, the specific heat capacity cₚ, and the mass m of the battery cell, the contact area S between the battery cell and the heat-absorbing layer, the density ρ of the water-containing layer, the mass percentage r of the water in the water-containing layer, and the thickness D of the water-containing layer and maintaining a balanced state thereof help ensure that when the battery cell encounters thermal runaway, the water-containing layer can absorb sufficient heat to suppress conduction of the thermal runaway phenomenon of the single battery cell to an adjacent battery cell, thereby ensuring that the battery group has relatively good safety performance, reducing occupation of a volume of the battery group by the water-containing layer as far as possible, and reducing a volumetric energy density decrease rate of the battery group.

The foregoing descriptions are merely preferred embodiments of this application, but are not intended to limit this application. Any modification, equivalent replacement, and improvement made without departing from the spirit and principle of this application should fall within the protection scope of this application.

## Claims

1. A battery group, comprising:
a battery cell (1); and
a heat-absorbing layer (2), the heat-absorbing layer (2) comprising a water-containing layer (23), the heat-absorbing layer (2) being disposed on at least a part of a surface of the battery cell (1), the water-containing layer (23) comprising a matrix and water, the matrix being made of a hydrophilic polymer material, and the water in the water-containing layer (23) being detachable from the matrix by heating; and
the battery cell (1) and the water-containing layer (23) satisfying the following condition: $0.2 \leq \frac{2252 rρS}{0.6 {Q}_{c} - 360 {c}_{p} m} \leq 30 ,$
wherein
D is a thickness of the water-containing layer (23), and is in a unit of m;
Q_{c} is a capacity of the battery cell (1), and is in a unit of kJ;
cₚ is a specific heat capacity of the battery cell (1), and is in a unit of kJ kg⁻¹ K⁻¹;
m is a mass of the battery cell (1), and is in a unit of kg;
S is a contact area between the battery cell (1) and the heat-absorbing layer (2), and is in a unit of m²;
ρ is a density of the water-containing layer (23), and is in a unit of kg m⁻³; and
r is a mass percentage of the water in the water-containing layer (23).

2. The battery group according to claim 1, wherein the thickness D of the water-containing layer (23) is 0.00025 to 0.001 m.

3. The battery group according to claim 1 or 2, wherein the capacity Q_{c} of the battery cell (1) is 576 to 3456 kJ.

4. The battery group according to any one of claims 1 to 3, wherein the specific heat capacity cₚ of the battery cell (1) is 0.8 to 1.2 kJ kg⁻¹ K⁻¹.

5. The battery group according to any one of claims 1 to 4, wherein the mass m of the battery cell (1) is 1 to 5 kg.

6. The battery group according to any one of claims 1 to 5, wherein the contact area S between the battery cell (1) and the heat-absorbing layer (2) is 0.02 to 0.5 m².

7. The battery group according to any one of claims 1 to 6, wherein the density ρ of the water-containing layer (23) is 900 to 1200 kg m⁻³.

8. The battery group according to any one of claims 1 to 7, wherein the mass percentage r of the water in the water-containing layer (23) is 80% to 99%.

9. The battery group according to any one of claims 1 to 8, wherein the heat-absorbing layer (2) further comprises an encapsulation film, and the water-containing layer (23) is encapsulated in the encapsulation film.

10. The battery group according to any one of claims 1 to 9, wherein the heat-absorbing layer (2) further comprises a first vapor chamber (21) and a second vapor chamber (22), the water-containing layer (23) is sandwiched between the first vapor chamber (21) and the second vapor chamber (22), and an edge region of the water-containing layer (23) is in communication with external space.

11. The battery group according to claim 10, wherein a first cavity is formed inside the first vapor chamber (21), and the first cavity is filled with a phase change working medium, and/or a second cavity is formed inside the second vapor chamber (22), and the second cavity is filled with a phase change working medium.

12. The battery group according to claim 11, wherein an inner wall of the first cavity is provided with first capillary structures that are in communication with each other, and/or an inner wall of the second cavity is provided with second capillary structures that are in communication with each other.

13. The battery group according to claim 10, wherein thicknesses of the first vapor chamber (21) and the second vapor chamber (22) each are 0.2 to 0.5 mm independently.

14. The battery group according to any one of claims 1 to 13, wherein there are a plurality of battery cells (1), the plurality of battery cells (1) are disposed side by side, a single heat-absorbing layer (2) is disposed between two adjacent battery cells (1), and the heat-absorbing layer (2) and one of the battery cells (1) adjacent to the heat-absorbing layer (2) satisfy the following condition: $0.2 \leq \frac{0.6 {Q}_{c} - {360}_{p} m}{2252 rρSD} \leq 30 .$

15. The battery group according to any one of claims 1 to 14, wherein the heat-absorbing layer (2) is disposed on a largest-area surface of the battery cell (1).

16. The battery group according to claim 15, wherein an area of the heat-absorbing layer (2) is less than or equal to an area of the largest-area surface of the battery cell (1).

17. The battery group according to any one of claims 1 to 16, wherein the water-containing layer (23) is a hydrogel layer.

18. A battery pack, comprising the battery group according to any one of claims 1 to 17.

19. A power consumption system, comprising the battery group according to any one of claims 1 to 17 or comprising the battery pack according to claim 18.
